# EUROPÄISCHE PATENTSCHRIFT

(11) **EP 0 377 850 B1**
(45) Veröffentlichungstag und Bekanntmachung des Hinweises auf die Patenterteilung: **10.05.1995**
(21) Anmeldenummer: 89123116.9
(22) Anmeldetag: 14.12.1989
(51) Int. Cl.: C07F 9/54

(54) **Verfahren zur Herstellung von (Methoxymethylen)-triphenyl-phosphonium-chlorid**
Process for preparing (methoxymethylene) triphenyl phosphonium chloride
Procédé de préparation de chlorure de (méthoxyméthylène)-triphényl-phosphonium

(30) Priorität: 10.01.1989 DE 3900793
(43) Veröffentlichungstag der Anmeldung: 18.07.1990
(73) Patentinhaber: SCHERING AKTIENGESELLSCHAFT, 13353 Berlin (DE)
(72) Erfinder: Häuser, Helmut, Dr., 94300 Orizaba Veracruz (MX)

(56) Entgegenhaltungen:
- CHEMISCHE BERICHTE, Band 94, Nr. 5, 1961, Seiten 1373-1383; G. WITTIG et al.:"Über die Herstellung von Vinyläthern, Vinylthioäthern und Vinylhalogeniden aufder Phosphylen-Basis; IV. Mitteil. über Phosphin-alkylene als olefinbildendeReagenzien"
- HOUBEN-WEYL: "Methoden der organischen Chemie", Band VI/3, Auflage 4, 1965,Seite 131
- SYNTHESIS, INTERNATIONAL JOURNAL OF METHODS IN SYNTHETIC ORGANIC CHEMISTRY, no. 8, August 1978, Seiten 588-589, Georg Theime Publishers; M.E.JUNG et al.: "A new efficient synthesis of iodemethyl ether"

## Beschreibung

Die Erfindung betrifft das in den Patentansprüchen gekennzeichnete Verfahren zur Herstellung von (Methoxymethylen)-triphenylphosphonium-chlorid.

Es ist bereits lange bekannt, daß man (Methoxymethylen)-triphenylphospohonium-chlorid aus Triphenylphosphin und Chlormethyl-methyl-ether herstellen kann (G. Wittig und M. Schlosser; Chem. Ber. 94, 1961, p 1376) . Ebenso lange ist bekannt, daß man α-Chloralkylether durch Umsetzung von Acetylchlorid mit Acetalen herstellen kann (Houben-Weyl "Methoden der organischen Chemie" Band VI/3, 1965, p 131) . Dieses Verfahren eignet sich besonders gut zur Herstellung von Chlormethyl-methyl-ether, aus Acetylchlorid und Dimethoxymethan, da der gebildete Chlormethyl-methyl-ether dann frei von stark kanzerogenem Bis- (chlormethyl) -ether ist (J.S. Amato et al., Synthesis, 1979, 970).

Es wurde nun gefunden, daß man diese beiden vorbekannten Reaktionsschritte im Eintopfverfahren durchführen kann. Im Gegensatz zu dem vorbeschriebenen Verfahren ist beim erfindungsgemäßen Verfahren die Anwendung höherer Temperaturen oder die Verwendung zusätzlicher Lösungsmittel überraschender Weise nicht erforderlich, sondern man erhält bereits eine völlige Umsetzung, wenn man Triphenylphosphin von 10 - 40° C - vorzugsweise bei Raumtemperatur - umsetzt.

Die Anwendung eines großen Überschußes an Dimethoxymethan als Lösungsmittel ist nicht notwendig, es reicht, wenn man pro mol Triphenylphosphin 2-5 mol Dimethoxymethan verwendet. Dies ist insbesondere deshalb überraschend, da sowohl das Ausgangsmaterial als auch das gebildete Endprodukt unter diesen Bedingungen weitgehend in ungelöster Form vorliegen.

Das verwendete Acetylchlorid wird in der theoretisch benötigten Menge oder in geringem Überschuß verwendet. Üblicherweise verwendet man pro mol Triphenylphosphin 1 - 1,5 mol Acetylchlorid. Da die Reaktion von Acetylchlorid mit Dimethoxymethan stark exotherm verläuft, ist es erforderlich, das Säurechlorid portionsweise zuzugeben oder zuzutropfen und die Mischung gegebenenfalls zu kühlen. Die Zugabe des Acetylchlorids kann vor Zugabe des Triphenylphosphins erfolgen oder nachdem man dieses in Dimethoxymethan suspendiert hat.

Die Reaktion wird zweckmäßigerweise so durchgeführt, daß man die Mischung 10-50 Stunden rührt und dann das abgeschiedene (Methoxymethylen)-triphenylphosphonium-chlorid durch Kristallisation abtrennt. Dieses kann dann mit einem inerten Lösungsmittel wie Benzol oder Toluol gewaschen und ohne weitere Reinigung zu weiteren Umsetzungen verwendet werden. Andererseits kann man die gewaschenen Produkte trocknen, umkristallisieren oder in anderer Weise in lagerbare Produkte überführen.

Die gewerbsmäßige Verwertung des (Methoxymethylen)-triphenylphosphonium-chlorids beispielsweise zur Synthese von Steroidverbindungen ist bekannt (S. Danishefsky et al. J. Org. Chem. 40, 1975, 1989).

Die nachfolgenden Ausführungsbeispiele dienen zur Erläuterung des erfindungsgemäßen Verfahrens.

### Beispiel 1

Zu 108 ml auf 15° C gekühltes Dimethoxymethan tropft man unter Stickstoff 84,6 ml Acetylchlorid und rührt die Mischung 3 Stunden lang bei 15-25° C. Dann setzt man der Mischung 120 ml Dimethoxymethan und 247 g Triphenylphosphin zu und rührt weitere 20 Stunden bei 20-25° C.

Dann filtriert man das abgeschiedene Produkt ab, wäscht es zweimal mit je 100 ml Toluol und erhält 180 g (Methoxymethylen)-triphenylphosphonium-chlorid vom Schmelzpunkt 195° C.

### Beispiel 2

Zu einer Suspension von 247 g Trimethylphosphin in 228 ml Dimethoxymethan tropft man unter Stickstoff bei 20-25° C 84,6 ml Acetylchlorid und rührt das Reaktionsgemisch 24 Stunden lang.

Dann arbeitet man die Mischung auf, wie in Beispiel 1 beschrieben und erhält 248 g (Methoxymethylen)-triphenylphosphonium-chlorid vom Schmelzpunkt 178° C.

### Beispiel 3

Unter Stickstoff füllt man 160 ml Dimethoxymethan, 2,1 ml Methanol und 178 g Triphenylphosphin ein. Man läßt 60 ml Acetylchlorid zutropfen und erhitzt 3 Stunden zum Rückfluß. Man fügt Aceton zu und kühlt eine Stunde bei 0° C. Man erhält so nach Filtration und Trocknen 180 g (Methoxymethylen)-triphenylphosphoniumchlorid vom Schmelzpunkt 196° C.

## Patentansprüche

1. Verfahren zur Herstellung von (Methoxymethylen)-triphenylphosphonium-chlorid der Formel
[(C₆H₅)₃P-CH₂-OCH₃]⁺Cl⁻,
dadurch gekennzeichnet, daß man Triphenylphosphin mit Acetylchlorid und Dimethoxymethan bei einer Reaktionstemperatur von 10 bis 40° C umsetzt.

2. Verfahren zur Herstellung von (Methoxymethylen)-triphenylphosphonium-chlorid gemäß Patentanspruch 1, dadurch gekennzeichnet, daß die Reaktionsmischung 1,0 - 1,5 mol Acetylchlorid und 2,0-5,0 mol Dimethoxymethan pro mol Triphenylphosphin enthalt.

3. Verfahren zur Herstellung von (Methoxymethylen)-triphenylphosphonium-chlorid gemäß Patentanspruch 1 und 2, dadurch gekennzeichnet, daß man die Reaktionsmischung über einen Zeitraum von 10 - 50 Stunden rührt und dann das ausgeschiedene (Methoxymethylen)-triphenylphosphonium-chlorid durch Filtration abtrennt.

## Claims

1. Process for the preparation of (methoxymethylene)-triphenylphosphonium chloride of formula
[(C₆H₅)₃P-CH₂-OCH₃]⁺Cl⁻
characterised in that triphenylphosphine is reacted with acetyl chloride and dimethoxymethane at a reaction temperature of from 10 to 40°C.

2. Process for the preparation of (methoxymethylene)-triphenylphosphonium chloride according to patent claim 1, characterised in that the reaction mixture contains 1.0-1.5 mol of acetyl chloride and 2.0-5.0 mol of dimethoxymethane per mol of triphenylphosphine.

3. Process for the preparation of (methoxymethylene)-triphenylphosphonium chloride according to patent claims 1 and 2, characterised in that the reaction mixture is stirred for a period of 10-50 hours and then the precipitated (methoxymethylene)-triphenylphosphonium chloride is separated off by filtration.

## Revendications

1. Procédé pour la préparation de chlorure de (méthoxyméthylène)-triphényl-phosphonium
[(C₆H₅)₃P-CH₂-OCH₃]⁺Cl⁻
caractérisé en ce qu'on fait réagir la triphénylphosphine avec le chlorure d'acétyle et le diméthoxyméthane à une température de réaction de 10 à 40°C.

2. Procédé pour la préparation de chlorure de (méthoxyméthylène)-triphényl-phosphonium selon la revendication 1, caractérisé en ce que le mélange réactionnel contient de 1,0 à 1,5 mole de chlorure d'acétyle et de 2,0 à 5,0 moles de diméthoxyméthane par mole de triphénylphosphine.

3. Procédé pour la préparation de chlorure de (méthoxyméthylène)-triphényl-phosphonium selon la revendication 1 et 2 caractérisé en ce qu'on agite le mélange réactionnel pendant 10 à 50 heures et ensuite on sépare par filtration le chlorure de (méthoxyméthylène)-triphényl-phosphonium précipité.
